# EUROPEAN PATENT APPLICATION

(11) **EP 4 365 041 A1**
(43) Date of publication of application: **08.05.2024**
(21) Application number: 23199997.0
(22) Date of filing: 27.09.2023
(51) Int. Cl.: B60T 8/17, B60T 8/26, B60T 8/32, B60W 10/184, B60W 10/22

(54) **STRADDLED VEHICLE**

(30) Priority: 01.11.2022 JP 2022175253
(71) Applicant: Yamaha Hatsudoki Kabushiki Kaisha, Iwata-shi, Shizuoka-ken 438-8501 (JP)
(72) Inventor: NAKAMURA, Shota, Iwata-shi, 438-8501 (JP); KASAI, Satoshi, Iwata-shi, 438-8501 (JP); SUGITA, Kenji, Iwata-shi, 438-8501 (JP); MATSUHISA, Yasuhide, Iwata-shi, 438-8501 (JP)
(74) Representative: Studio Torta S.p.A.

(57) **Abstract**

To perform appropriate braking and suppress reduction in riding comfort when a rider operates a brake for sudden braking in a straddle vehicle including an electronically controlled suspension, a control device (60) of a motorcycle (1) includes a brake controller (62) and a suspension controller (63); when one of a brake lever (8C) and a brake pedal (9C) is operated, the brake controller (62) executes control for actuating both a front wheel brake (8B) and a rear wheel brake (9B); when the brake controller (62) executes the control, the suspension controller (63) performs at least one of increasing a damping force of a front fork (20) in a contraction direction, increasing a spring reaction force of the front fork 20, increasing a damping force of the rear suspension 30 in an expansion direction, and reducing a spring reaction force of the rear suspension 30.

## Description

### Technical field

The present invention relates to a straddled vehicle including an electronically controlled suspension.

### Prior Art

Conventionally, straddled vehicles that include, as a suspension, such as a front fork, a rear suspension, or the like, an electronically controlled suspension capable of adjusting a damping force by electronic control have been known. For example, Japanese Patent No. 6842568 describes such a straddled vehicle.

A straddled vehicle disclosed in Japanese Patent No. 6842568 includes a radar device that detects an obstacle (including another vehicle) in front of the vehicle and automatically actuates a brake when a collision with the obstacle is likely to occur. Japanese Patent No. 6842568 describes the following control. First, whether a collision of a motorcycle with an obstacle in front is likely to occur is detected based on a detection result of the radar device. When a collision is likely to occur, whether a brake operation has been performed by a rider is determined. When a brake operation has been performed by the rider, normal braking is performed. When a brake operation has not been performed by the rider, a warning is given to the rider by displaying the warning on a meter or the like. After a warning is given, characteristics of a front fork and a rear suspension are adjusted to increase a damping force of the front fork in a contraction direction and a damping force of the rear suspension in an expansion direction. Thereafter, a front wheel brake and a rear wheel brake are automatically actuated.

According to the above-described control, before the front wheel brake and the rear wheel brake are actuated, an operation of the front fork in the contraction direction becomes stiff and an operation of the rear suspension in the expansion direction becomes stiff. Therefore, when the front wheel brake and the rear wheel brake are actuated, change of a posture of a vehicle body to a front-down posture is suppressed, and pitching of the motorcycle is reduced.

Patent Document 1: Japanese Patent No. 6842568

In the motorcycle, control for suppressing pitching is performed when a brake operation has not been performed by the rider. When a brake operation has been performed by the rider, normal braking in which the front wheel brake and the rear wheel brake operate in accordance with an operation of the rider is performed and control of a suspension is not performed. However, for example, in a case where, when the rider instantly performs a brake operation at a time when a preceding vehicle suddenly decelerates or the like, the brake operation by the rider is not necessarily appropriate. Depending on the brake operation by the rider, pitching occurs and riding comfort is reduced in some cases.

In view of the foregoing, the present invention has been devised and it is therefore an object of the present invention to enable performing an appropriate braking and suppressing reduction in riding comfort when a rider operates a brake for sudden braking in a straddled vehicle including an electronically controlled suspension.

### Description of the invention

A straddled vehicle disclosed herein includes a vehicle body frame, a front wheel supported by the vehicle body frame, a rear wheel supported by the vehicle body frame, a front wheel brake that brakes the front wheel, a rear wheel brake that brakes the rear wheel, a front wheel brake operator that is operated by a rider, a rear wheel brake operator that is operated by the rider, an electronically controlled front suspension connected to the vehicle body frame and the front wheel, an electronically controlled rear suspension connected to the vehicle body frame and the rear wheel, and a control device connected to the front wheel brake, the rear wheel brake, the front wheel brake operator, the rear wheel brake operator, the front suspension, and the rear suspension. The control device includes a brake controller and a suspension controller. When one of the front wheel brake operator and the rear wheel brake operator is operated, the brake controller executes control for actuating both the front wheel brake and the rear wheel brake. When the brake controller executes the control, the suspension controller performs at least one of increasing a damping force of the front suspension in a contraction direction, increasing a spring reaction force of the front suspension, increasing a damping force of the rear suspension in an expansion direction, and reducing a spring reaction force of the rear suspension.

According to the straddled vehicle, even when the rider operates only one of the front wheel brake operator and the rear wheel brake operator for sudden braking, both the front wheel brake and the rear wheel brake are actuated. Even when the brake operation by the rider is insufficient for sudden braking, an appropriate braking can be performed. Moreover, when the rider operates only one of the front wheel brake operator and the rear wheel brake operator for sudden braking, at least one of increasing the damping force of the front suspension in the contraction direction, increasing the spring reaction force of the front suspension, increasing the damping force of the rear suspension in the expansion direction, and reducing the spring reaction force of the rear suspension is performed. Thus, change of a posture of the straddled vehicle to a front-down posture can be suppressed, so that pitching can be suppressed. Accordingly, reduction in riding comfort can be suppressed.

The brake controller may be configured to, when the front wheel brake operator is not operated and the rear wheel brake operator is operated, actuate both the front wheel brake and the rear wheel brake.

Thus, when the rider operates only the rear wheel brake operator for sudden braking, not only the rear wheel brake but also the front wheel brake is actuated. Accordingly, appropriate braking can be performed.

The brake controller may be configured to, when the front wheel brake operator is not operated and the rear wheel brake operator is operated to a degree equal to or more than a threshold, actuate the front wheel brake and reduce a braking force of the rear wheel brake to a lower level than a braking force by an operation of the rear wheel brake operator.

Thus, when the rider operates only the rear wheel brake operator for sudden braking, not only the rear wheel brake but also the front wheel brake is actuated. Moreover, when an operation amount of the rear wheel brake operator by the rider is large, increase of the braking force of the rear wheel brake to an excessive level can be prevented. Accordingly, appropriate braking can be performed.

The suspension controller may be configured to, when the brake controller executes the control, cause the damping force of the front suspension in the contraction direction to increase and/or the damping force of the rear suspension in the expansion direction to increase as a braking force of the front wheel brake and/or the rear wheel brake increases.

Thus, as degree of deceleration of the straddled vehicle increases, the damping force of the front suspension in the contraction direction increases and/or the damping force of the rear suspension in the expansion direction increases. Pitching can be more effectively suppressed, so that reduction in riding comfort can be further suppressed.

The suspension controller may be configured to, when the brake controller executes the control, cause the spring reaction force of the front suspension to increase and/or the spring reaction force of the rear suspension to reduce as a braking force of the front wheel brake and/or the rear wheel brake increases.

Thus, as the degree of deceleration of the straddled vehicle increases, the spring reaction force of the front suspension increases and/or the spring reaction force of the rear suspension reduces. Pitching can be more effectively suppressed, so that reduction in riding comfort can be further suppressed.

The straddled vehicle may further include a preceding vehicle detection device that is supported by the vehicle body frame and detects an inter-vehicle distance from a preceding vehicle. The brake controller may be configured to, when one of the front wheel brake operator and the rear wheel brake operator is operated, control the braking forces of the front wheel brake and the rear wheel brake, based on at least the inter-vehicle distance detected by the preceding vehicle detection device.

Thus, when the rider operates one of the front wheel brake operator and the rear wheel brake operator for sudden braking, the braking forces of the front wheel brake and the rear wheel brake are controlled based on the inter-vehicle distance from the preceding vehicle. Accordingly, even when the brake operation by the rider is insufficient for sudden braking, appropriate braking can be performed to keep the inter-vehicle distance.

The brake controller may be configured to calculate a reduction amount of the inter-vehicle distance detected by the preceding vehicle detection device per unit time and, when the reduction amount is equal to or larger than a threshold and it is detected that the front wheel brake operator is operated to a degree equal to or lower than the threshold, actuate the rear wheel brake and increase the braking force of the front wheel brake to a higher level than a braking force by an operation of the front wheel brake operator.

Thus, when the rider operates the front wheel brake operator at a time when the inter-vehicle distance from the preceding vehicle is suddenly reduced due to sudden deceleration of the preceding vehicle or the like, both the front wheel brake and the rear wheel brake are actuated and the braking force of the front wheel brake is increased to a higher level than a braking force by an operation of the front wheel brake operator. Thus, even when the brake operation by the rider is insufficient, appropriate braking can be performed.

The brake controller may be configured to calculate a reduction amount of the inter-vehicle distance detected by the preceding vehicle detection device per unit time and, when the reduction amount is equal to or larger than a threshold and it is detected that the rear wheel brake operator is operated to a degree equal to or lower than the threshold, actuate the front wheel brake and increase the braking force of the rear wheel brake to a higher level than a braking force by an operation of the rear wheel brake operator.

Thus, when the rider operates the rear wheel brake operator at a time when the inter-vehicle distance from the preceding vehicle is suddenly reduced due to sudden deceleration of the preceding vehicle or the like, both the front wheel brake and the rear wheel brake are actuated and the braking force of the rear wheel brake is increased to a higher level than a braking force by an operation of the rear wheel brake operator. Thus, even when the brake operation by the rider is insufficient, appropriate braking can be performed.

The suspension controller may be configured to, when the brake controller executes the control, cause the damping force of the front suspension in the contraction direction to increase and/or the damping force of the rear suspension in the expansion direction to increase as the braking force of the front wheel brake and/or the rear wheel brake increases.

Thus, as the degree of deceleration of the straddled vehicle increases, the damping force of the front suspension in the contraction direction increases and/or the damping force of the rear suspension in the expansion direction increases. Pitching can be more effectively suppressed, so that reduction in riding comfort can be further suppressed.

The suspension controller may be configured to, when the brake controller executes the control, cause the spring reaction force of the front suspension to increase and/or the spring reaction force of the rear suspension to reduce as the braking force of the front wheel brake and/or the rear wheel brake increases.

Thus, as the degree of deceleration of the straddled vehicle increases, the spring reaction force of the front suspension increases and/or the spring reaction force of the rear suspension reduces. Pitching can be more effectively suppressed, so that reduction in riding comfort can be further suppressed.

According to the present invention, in a straddled vehicle including an electronically controlled suspension, appropriate braking can be performed and reduction in riding comfort can be suppressed when a rider operates a brake for sudden braking.

### Brief description of the drawings

FIG. 1 is a side view of a motorcycle according to an embodiment.
FIG. 2 is a diagram illustrating a configuration of a control system of a motorcycle.
FIG. 3 is a diagram illustrating a configuration of a front fork.
FIG. 4 is a diagram illustrating a configuration of a rear suspension.
FIG. 5 is a functional block diagram of a control device.
FIG. 6 is a flowchart of a first control example.
FIG. 7 is a flowchart of a second control example.

### Embodiments of the invention

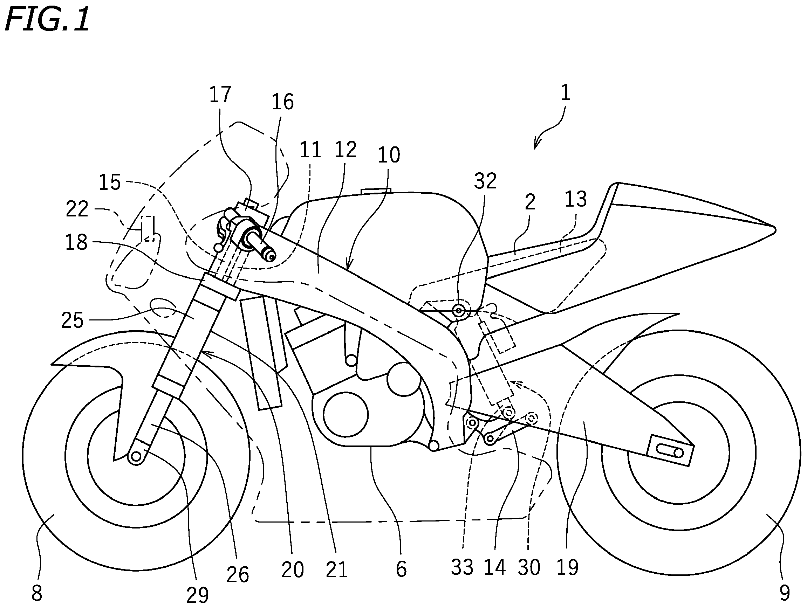

With reference to the attached drawings, one embodiment of a straddled vehicle will be described below. As illustrated in FIG. 1, a straddled vehicle according to this embodiment is a motorcycle 1.

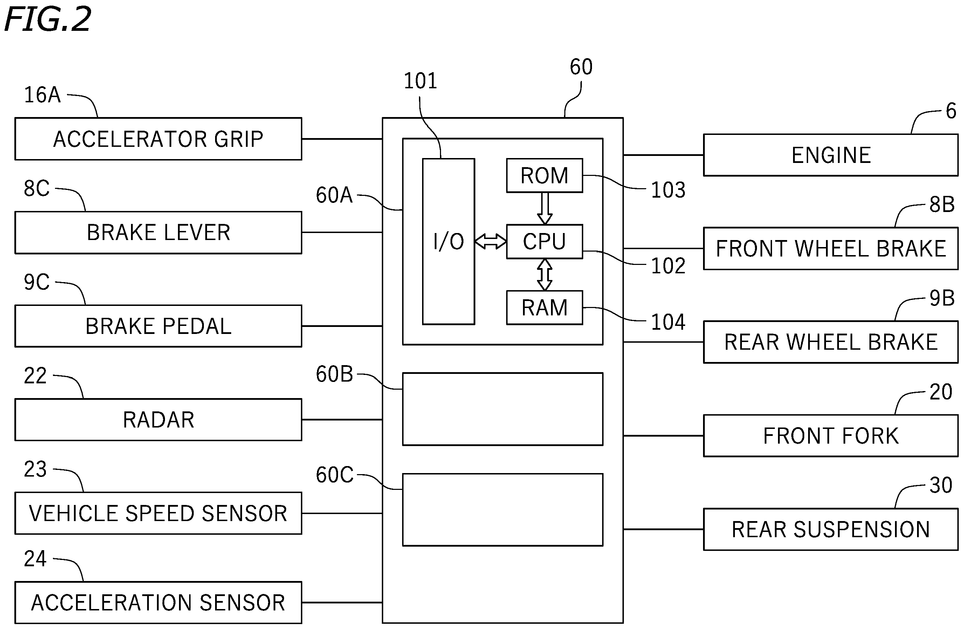

As illustrated in FIG. 1, the motorcycle 1 includes a vehicle body frame 10, a seat 2 supported by the vehicle body frame 10, an internal combustion engine (which will be hereinafter referred to as an engine) 6 supported by the vehicle body frame 10, a front wheel 8 and a rear wheel 9 supported by the vehicle body frame 10, an electronically controlled front fork 20 connected to the vehicle body frame 10 and the front wheel 8, an electronically controlled rear suspension 30 connected to the vehicle body frame 10 and the rear wheel 9, and a radar 22. As illustrated in FIG. 2, the motorcycle 1 includes an accelerator grip 16A that is an example of an accelerator operator, a brake lever 8C that is an example of a front wheel brake operator, a brake pedal 9C that is an example of a rear wheel brake operator, a vehicle speed sensor 23 that detects a speed of the motorcycle 1, an acceleration sensor 24 that detects an acceleration of the motorcycle 1, a front wheel brake 8B that brakes the front wheel 8, a rear wheel brake 9B that brakes the rear wheel 9, and a control device 60. The control device 60 is connected to the accelerator grip 16A, the brake lever 8C, and the brake pedal 9C and is configured to detect operation amounts thereof. The control device 60 is communicably connected to the radar 22, the vehicle speed sensor 23, and the acceleration sensor 24. The control device 60 is connected to the engine 6, the front wheel brake 8B, the rear wheel brake 9B, the front fork 20, and the rear suspension 30 and is configured to control these components.

As illustrated in FIG. 1, the vehicle body frame 10 includes a head pipe 11, a main frame 12 extending rearward from the head pipe 11, and a seat frame 13 extending rearward from the main frame 12. The seat 2 is supported by the seat frame 13. Although not illustrated in FIG. 1, the brake pedal 9C is supported by a lower portion of the main frame 12. The brake pedal 9C is operated by a foot of the rider sitting on the seat 2.

A steering shaft 15 is rotatably inserted in the head pipe 11. A handlebar 16 is mounted on an upper end portion of the steering shaft 15. Although not illustrated in FIG. 1, the accelerator grip 16A is rotatably mounted to a right end portion of the handlebar 16 and the brake lever 8C is pivotably mounted to the right end portion of the handlebar 16. The accelerator grip 16A and the brake lever 8C are operated by a right hand of the rider. An upper bracket 17 is fixed to the upper end portion of the steering shaft 15. An under bracket 18 is fixed to a lower end portion of the steering shaft 15.

The engine 6 is supported by the vehicle body frame 10. The engine 6 is an example of a drive source that drives the rear wheel 9. However, the drive source for traveling is not limited to the engine 6. The drive source may include an electric motor. The drive source may include both of an internal combustion engine and an electric motor.

The front wheel 8 is supported by the head pipe 11 of the vehicle body frame 10 via the front fork 20. The rear wheel 9 is supported by the main frame 12 of the vehicle body frame 10 via a rear arm 19. A front end portion of the rear arm 19 is rotatably connected to the main frame 12 via an unillustrated pivot shaft. A rear end portion of the rear arm 19 is connected to the rear wheel 9. The rear wheel 9 is connected to the engine 6 via a power transmission member (not illustrated), such as a chain of the like. The rear wheel 9 is a drive wheel and receives a driving force of the engine 6 to rotate.

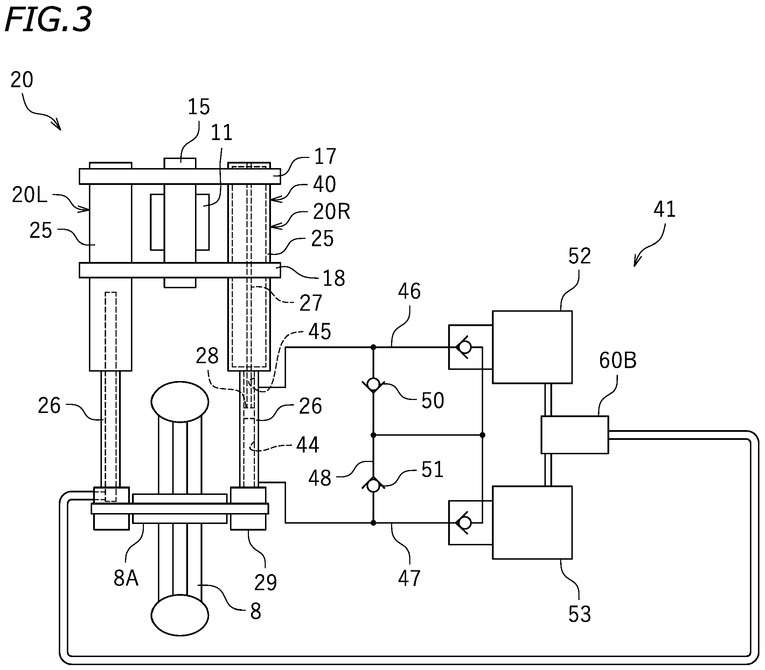

The front fork 20 is an example of an electronic controlled suspension. Note that the electronic controlled suspension is a suspension in which at least a damping force characteristic is adjusted by electronic control. Herein, the front fork 20 is configured such that both a damping force characteristic and a spring characteristic are adjustable by electronic control. As illustrated in FIG. 3, the front fork 20 is fixed to the upper bracket 17 and the under bracket 18. The front fork 20 includes a left tube 20L and a right tube 20R.

Each of the left tube 20L and the right tube 20R includes an outer tube 25 and an inner tube 26. The outer tube 25 is mounted to the upper bracket 17 and the under bracket 18. A lower end portion of the inner tube 26 is joined to an axle 8A of the front wheel 8 via an axle bracket 29. The inner tube 26 is slidably inserted inside the outer tube 25. The inner tube 26 slides against the outer tube 25, so that the front fork 20 expands and contracts. In this embodiment, when the inner tube 26 moves downward with respect to the outer tube 25, the front fork 20 expands. When the inner tube 26 moves upward with respect to the outer tube 25, the front fork 20 contracts. Downward and upward correspond to an expansion direction and a contraction direction of the front fork 20, respectively.

Although not illustrated, a fork spring is arranged inside each of the right tube 20R and the left tube 20L. The fork spring is an example of a spring of the front fork 20.

The right tube 20R includes an oil-type shock absorber 40 that is electronically controlled. The shock absorber 40 includes the inner tube 26, a rod 27, a piston 28, and a control valve assembly 41. The rod 27 is undisplaceably fixed to the outer tube 25. The piston 28 is connected to a lower end portion of the rod 27. The piston 28 is arranged inside the inner tube 26. An inner space of the inner tube 26 is partitioned into an oil chamber 44 and an oil chamber 45 by the piston 28.

The control valve assembly 41 is connected to the oil chamber 44 and the oil chamber 45. The control valve assembly 41 includes oil paths 46 to 48, check valves 50 and 51, and electronically controlled piston valves 52 and 53. The check valve 50 is arranged between the oil path 46 and the oil path 48. The check valve 50 allows a flow of oil from the oil path 48 to the oil path 46 and prohibits a flow of oil from the oil path 46 to the oil path 48. The check valve 51 is arranged between the oil path 47 and the oil path 48. The check valve 51 allows a flow of oil from the oil path 48 to the oil path 47 and prohibits a flow of oil from the oil path 47 to the oil path 48. The piston valve 52 connects the oil path 46 and the oil path 48. The piston valve 52 allows a flow of oil from the oil path 46 to the oil path 48 and prohibits a flow of oil from the oil path 48 to the oil path 46. The piston valve 53 connects the oil path 47 and the oil path 48. The piston valve 53 allows a flow of oil from the oil path 47 to the oil path 48 and prohibits a flow of oil from the oil path 48 to the oil path 47. Each of the piston valves 52 and 53 is constituted of, for example, a solenoid valve.

When oil flows through the piston valve 52, the oil receives a flow resistance. Degree of the flow resistance caused by the piston valve 52 is controlled by the control device 60 (specifically, a control unit 60B that will be described later). When the control device 60 increases the flow resistance of the piston valve 52, the oil receives more resistance as the oil flows from the oil path 46 to the oil path 48. Thus, the oil is difficult to flow from the oil chamber 45 to the oil chamber 44 through the control valve assembly 41, so that a damping force of the front fork 20 in the expansion direction is increased. Conversely, when the control device 60 reduces the flow resistance of the piston valve 52, the damping force of the front fork 20 in the expansion direction is reduced.

When the oil flows through the piston valve 53, the oil receives a flow resistance. Degree of the flow resistance caused by the piston valve 53 is controlled by the control device 60. When the control device 60 increases the flow resistance of the piston valve 53, the oil receives more resistance as the oil flows from the oil path 47 to the oil path 48. Thus, the oil is difficult to flow from the oil chamber 44 to the oil chamber 45 through the control valve assembly 41, so that a damping force of the front fork 20 in the contraction direction is increased. Conversely, when the control device 60 reduces the flow resistance of the piston valve 53, the damping force of the front fork 20 in the contraction direction is reduced.

As illustrated in FIG. 1, an upper end portion 32 of the rear suspension 30 is fixed to the main frame 12 via a bracket. A lower end portion 33 of the rear suspension 30 is connected to a joining member 14 fixed to the rear arm 19. The rear suspension 30 is indirectly connected to the vehicle body frame 10 and the rear wheel 9.

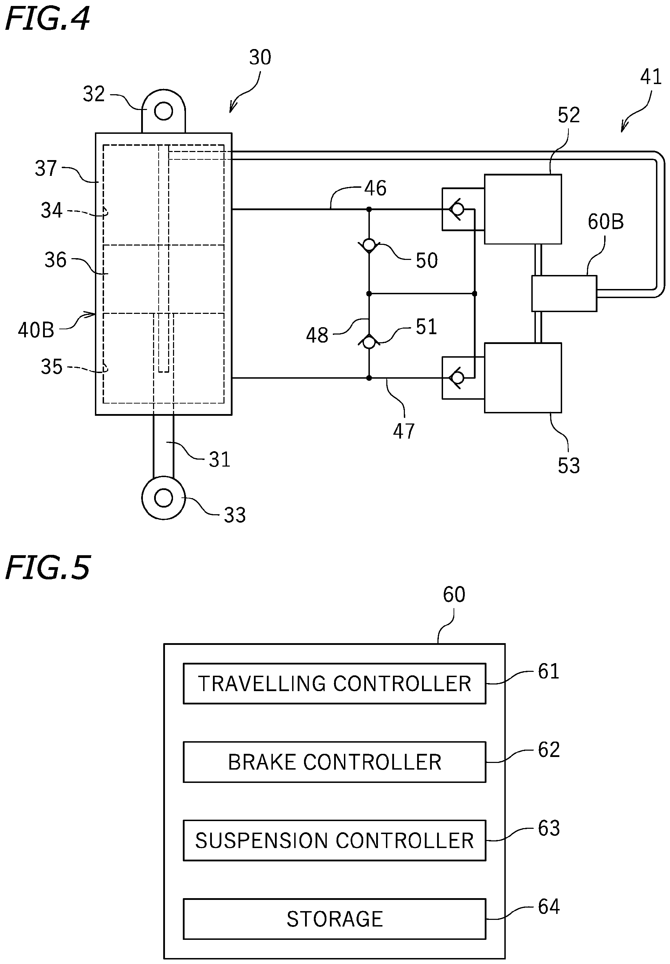

The rear suspension 30 is another example of the electronically controlled suspension. Herein, the rear suspension 30 is configured such that a damping force characteristic and a spring characteristic can be adjusted by electronic control. The rear suspension 30 includes an unillustrated spring. Moreover, as illustrated in FIG. 4, the rear suspension 30 includes an oil-type shock absorber 40B that is electronically controlled. The shock absorber 40B includes a cylinder 37, a piston 36 slidably arranged inside the cylinder 37, and a rod 31 extending from the piston 36. An internal space of the cylinder 37 is partitioned into an oil chamber 34 and an oil chamber 35 by the piston 36. When the piston 36 moves downward, the rear suspension 30 expands. When the piston 36 moves upward, the rear suspension 30 contracts. Downward and upward correspond to an expansion direction and a contraction direction of the rear suspension 30, respectively.

The rear suspension 30 includes a control valve assembly 41 that is similar to the control valve assembly 41 of the front fork 20. Each member that is similar to a corresponding member of the control valve assembly 41 of the front fork 20 will be denoted below by the same reference character as that of the corresponding member of the control valve assembly 41 and description thereof will be omitted. In the rear suspension 30, the oil path 46 of the control valve assembly 41 is connected to the oil chamber 34. The oil path 47 of the control valve assembly 41 is connected to the oil chamber 35.

When the control device 60 (specifically, the control unit 60B that will be described later) increases the flow resistance of the piston valve 52, the oil is difficult to flow from the oil chamber 34 to the oil chamber 35 through the control valve assembly 41, so that a damping force of the rear suspension 30 in the contraction direction is increased. Conversely, when the control device 60 reduces the flow resistance of the piston valve 52, the damping force of the rear suspension 30 in the contraction direction is reduced.

When the control device 60 increases the flow resistance of the piston valve 53, the oil is difficult to flow from the oil chamber 35 to the oil chamber 34 through the control valve assembly 41, so that a damping force of the rear suspension 30 in the expansion direction is increased. Conversely, when the control device 60 reduces the flow resistance of the piston valve 53, the damping force of the rear suspension 30 in the expansion direction is reduced.

Each of the front wheel brake 8B and the rear wheel brake 9B is a hydraulic brake. Although not illustrated, each of the front wheel brake 8B and the rear wheel brake 9B includes a brake caliper with an oil chamber. The control device 60 can control braking forces of the front wheel brake 8B and the rear wheel brake 9B by controlling a pressure of the oil chamber of the brake caliper.

The radar 22 (see FIG. 1) is an example of a preceding vehicle detection device that detects an inter-vehicle distance from a preceding vehicle (that is, another vehicle that travels in front of the motorcycle 1). The radar 22 transmits electromagnetic waves, such as millimeter waves or the like, toward front of the vehicle and receives their reflected waves. The radar 22 is supported by the vehicle body frame 10 and is installed in a front portion of the motorcycle 1. Note that, as the preceding vehicle detection device, a device that detects an inter-vehicle distance from a preceding vehicle is sufficient, and the preceding vehicle detection device is not limited to the radar 22. The preceding vehicle detection device may be constituted of a laser, a camera, or the like.

The control device 60 is constituted of one or two or more microcomputers. In this embodiment, as illustrated in FIG. 2, the control device 60 includes a plurality of control units. Specifically, the control device 60 includes a control unit 60A that controls the engine 6, a control unit 60B that controls the front fork 20 and the rear suspension 30, and a control unit 60C that controls the front wheel brake 8B and the rear wheel brake 9B. The control unit 60A includes an interface 101, a CPU 102, a ROM 103, a RAM 104, or the like. Although not illustrated, each of the control units 60B and 60C also includes an interface 101, a CPU 102, a ROM 103, a RAM 104, or the like. The control units 60A, 60B, and 60C are formed as separate bodies and are arranged in places apart from each other. The control units 60A, 60B, and 60C are communicably connected to each other. However, there is no limitation on a configuration of the control device 60. The control device 60 may be constituted of a single control unit.

As described above, the motorcycle 1 includes the vehicle speed sensor 23 that detects the speed of the motorcycle 1 and the acceleration sensor 24 that detects the acceleration of the motorcycle 1. The acceleration sensor 24 is constituted of, for example, an inertia measurement unit (IMU).

FIG. 5 is a functional block diagram of the control device 60. The CPU 102 of the control device 60 (see FIG. 2) executes computer programs stored in the ROM 103 or the like to function as a traveling controller 61 that executes cruise control, a brake controller 62 that executes control of the front wheel brake 8B and the rear wheel brake 9B, and a suspension controller 63 that executes control of the front fork 20 and the rear suspension 30. The ROM 103 or the RAM 104 of the control device 60 functions as a storage 64 that stores computer programs of various controls, a map related to parameters of various controls, or the like. Note that the control device 60 may include, as the storage 64, some other memory than the ROM 103 and the RAM 104.

There is no particular limitation on a type of cruise control. Cruise control may be control in which the motorcycle 1 is caused to travel at a certain speed that has been set, may be control in which the motorcycle 1 is caused to follow a preceding vehicle regardless of a speed of the preceding vehicle, and may be control in which the motorcycle 1 is caused to follow a preceding vehicle based on the speed of the preceding vehicle. In this embodiment, the traveling controller 61 can execute control (which will be hereinafter referred to as an adaptive cruise control) in which, when there is no preceding vehicle or when a speed of a preceding vehicle is higher than a preset speed (which will be hereinafter referred to as a set speed), the motorcycle 1 is caused to travel at the set speed and, when the speed of the preceding vehicle is lower than the set speed, the motorcycle 1 is caused to travel behind the preceding vehicle while keeping a preset inter-vehicle distance (which will be hereinafter referred to as a set distance) from the preceding vehicle. Note that the set distance may be a predetermined distance or may be a predetermined distance range. The set distance may vary in accordance with the speed of the motorcycle 1. For example, when the speed of the motorcycle 1 is relatively high, the set distance may be a relatively long distance, and when the speed of the motorcycle 1 is relatively low, the set distance may be a relatively short distance.

The traveling controller 61 together with the brake controller 62 can execute cruise control. During the cruise control, the traveling controller 61 and the brake controller 62 control the engine 6, the front wheel brake 8B, and the rear wheel brake 9B, based on at least the inter-vehicle distance detected by the radar 22. In this embodiment, the traveling controller 61 increases or reduces an output of the engine 6 and the brake controller 62 actuates the front wheel brake 8B and/or the rear wheel brake 9B, based on the inter-vehicle distance detected by the radar 22, the speed of the motorcycle 1 detected by the vehicle speed sensor 23, and the acceleration of the motorcycle 1 detected by the acceleration sensor 24. Note that an acceleration can be a positive value and a negative value. In the following, negatively accelerating will be referred to as decelerating and a negative acceleration will be also referred to as a deceleration.

During the adaptive cruise control, when the speed of the motorcycle 1 is equal to or lower than the set speed and the inter-vehicle distance is larger than the set distance, the traveling controller 61 increases the output of the engine 6. Thus, the motorcycle 1 accelerates and the inter-vehicle distance reduces. Conversely, during the adaptive cruise control, when the inter-vehicle distance is reduced to be smaller than the set distance, the traveling controller 61 reduces the output of the engine 6, and furthermore, the brake controller 62 actuates the front wheel brake 8B and/or the rear wheel brake 9B, as necessary. Thus, the motorcycle 1 decelerates and the inter-vehicle distance is increased. In a manner described above, the motorcycle 1 follows the preceding vehicle while keeping the inter-vehicle distance at the set distance.

The brake controller 62 controls the front wheel brake 8B and the rear wheel brake 9B. The brake controller 62 controls a hydraulic pressure of the brake caliper of each of the front wheel brake 8B and the rear wheel brake 9B to control on and off and a braking force of each of the front wheel brake 8B and the rear wheel brake 9B.

The brake controller 62 is configured to, when one of the brake lever 8C and the brake pedal 9C is operated, execute braking force distribution control in which both the front wheel brake 8B and the rear wheel brake 9B are actuated. The brake controller 62 executes control in which, for example, when the brake lever 8C is not operated and the brake pedal 9C is operated, both the front wheel brake 8B and the rear wheel brake 9B are actuated. For example, when the brake lever 8C is not operated and the brake pedal 9C is operated to a degree equal to or more than a predetermined threshold, the brake controller 62 actuates the front wheel brake 8B and executes control in which the braking force of the rear wheel brake 9B is reduced to a lower level than that of the braking force of the rear wheel brake 9B by an operation of the brake pedal 9C.

The brake controller 62 is configured to, when one of the brake lever 8C and the brake pedal 9C is operated, execute radar interlocking control in which the braking forces of the front wheel brake 8B and the rear wheel brake 9B are adjusted, based on at least the inter-vehicle distance from the preceding vehicle detected by the radar 22.

The brake controller 62 is configured to, when the brake lever 8C is operated, execute brake assist control in which the braking force of the front wheel brake 8B is increased to a higher level than that of the braking force of the front wheel brake 8B by an operation of the brake lever 8C. The brake controller 62 is configured to, when the brake pedal 9C is operated, execute brake assist control in which the braking force of the rear wheel brake 9B is increased to a higher level than that of the braking force of the rear wheel brake 9B by an operation of the brake pedal 9C. Herein, the braking force of the front wheel brake 8B by an operation of the brake lever 8C is a braking force of the front wheel brake 8B generated only by a hydraulic pressure generated in the brake caliper of the front wheel brake 8B by operating the brake lever 8C. The braking force of the rear wheel brake 9B by an operation of the brake pedal 9C is a braking force of the rear wheel brake 9B generated only by a hydraulic pressure generated in the brake caliper of the rear wheel brake 9B by operating the brake pedal 9C. In other words, the braking force of the front wheel brake 8B by an operation of the brake lever 8C and the braking force of the rear wheel brake 9B by an operation of the brake pedal 9C are a braking force of the front wheel brake 8B and a braking force of the rear wheel brake 9B when the brake controller 62 is not performing the brake assist control, respectively. In executing the brake assist control, the brake controller 62 increases the braking force of the front wheel brake 8B by increasing the hydraulic pressure of the brake caliper of the front wheel brake 8B and/or increases the braking force of the rear wheel brake 9B by increasing the hydraulic pressure of the brake caliper of the rear wheel brake 9B.

The suspension controller 63 controls the damping force of the front fork 20, a spring reaction force of the front fork 20, the damping force of the rear suspension 30, and a spring reaction force of the rear suspension 30. The spring reaction force of the front fork 20 is a reaction force to a force of the front fork 20 in the contraction direction. The spring reaction force of the rear suspension 30 is a reaction force to a force of the rear suspension 30 in the contraction direction. When the brake controller 62 executes braking force distribution control, radar interlocking control, and brake assist control, the suspension controller 63 performs at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30. For example, the suspension controller 63 causes the damping force of the front fork 20 in the contraction direction to increase and/or the damping force of the rear suspension 30 in the expansion direction to increase as the braking force of the front wheel brake 8B and/or the rear wheel brake 9B increases. For example, the suspension controller 63 causes the spring reaction force of the front fork 20 to increase and/or the spring reaction force of the rear suspension 30 to reduce as the braking force of the front wheel brake 8B and/or the rear wheel brake 9B increases.

When the damping force of the front fork 20 in the contraction direction is increased, a contraction operation of the front fork 20 becomes stiff and a posture of the vehicle body is less likely to change to a front-down posture. When the damping force of the rear suspension 30 in the expansion direction is increased, an expansion operation of the rear suspension 30 becomes stiff and the posture of the vehicle body is less likely to change to the front-down posture. When the spring reaction force of the front fork 20 is increased, the front fork 20 is difficult to contract and the posture of the vehicle body is less likely to change to the front-down posture. When the spring reaction force of the rear suspension 30 is reduced, the rear suspension 30 is difficult to expand and the posture of the vehicle body is less likely to change to the front-down posture. When the posture of the vehicle body is less likely to change to the front-down posture at sudden braking, pitching is less likely to occur.

Next, an example of control of the motorcycle 1 will be described.

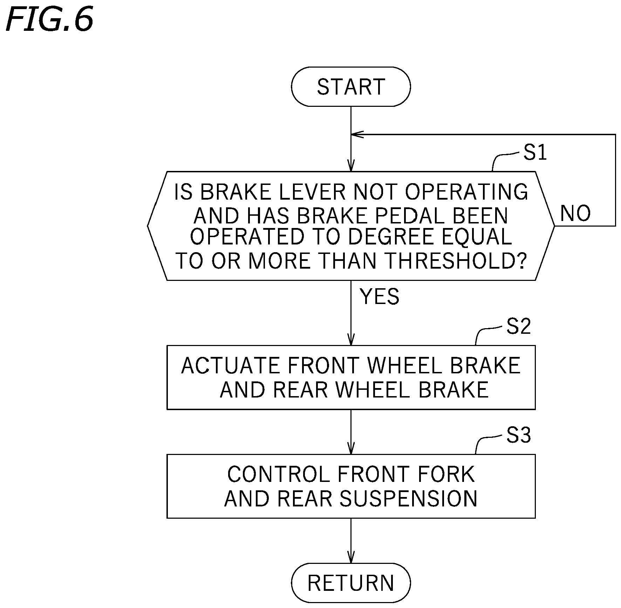

FIG. 6 is a flowchart related to a first control example. The first control example is, for example, control that is performed when the preceding vehicle suddenly decelerates during the adaptive cruise control and the rider strongly steps on the brake pedal 9C to suddenly apply a brake.

First, in Step S1, the brake controller 62 determines whether the brake lever 8C is not operating and the brake pedal 9C is operating to a degree equal to or more than a threshold. Note that the threshold is a preset value and is a value that serves as a reference used for determining whether the brake pedal 9C has been suddenly operated.

When a determination result of Step S1 is YES, in Step S2, the brake controller 62 actuates both the front wheel brake 8B and the rear wheel brake 9B. That is, the brake lever 8C has not been operated, but not only the rear wheel brake 9B but also the front wheel brake 8B is actuated. At this time, in order to balance the braking force of the front wheel brake 8B and the braking force of the rear wheel brake 9B, the braking force of the rear wheel brake 9B may be caused to be smaller than the braking force of the rear wheel brake 9B by an operation of the brake pedal 9C.

The motorcycle 1 decelerates due to actuation of the front wheel brake 8B and the rear wheel brake 9B. When the motorcycle 1 decelerates, it is likely that the posture of the vehicle body changes to the front-down posture and pithing occurs. In Step S3, the suspension controller 63 controls the front fork 20 and/or the rear suspension 30 to suppress pitching. Specifically, the suspension controller 63 performs at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30. Thus, change of the posture of the vehicle body to the front-down posture is suppressed and pitching is suppressed.

Herein, after actuation of the front wheel brake 8B and the rear wheel brake 9B is started, the suspension controller 63 increases the damping force of the front fork 20 in the contraction direction and the damping force of the rear suspension 30 in the expansion direction. The storage 64 of the control device 60 may be configured to store a map defining a relationship between the braking force of the front wheel brake 8B and/or the rear wheel brake 9B and each of the damping force of the front fork 20 in the contraction direction and the damping force of the rear suspension 30 in the expansion direction. In this case, the suspension controller 63 can control the damping forces of the front fork 20 and the rear suspension 30, based on the map. The map may be set such that, as the braking force of the front wheel brake 8B and/or the rear wheel brake 9B increases, the damping force of the front fork 20 in the contraction direction and the damping force of the rear suspension 30 in the expansion direction increase. In this case, the suspension controller 63 causes the damping force of the front fork 20 in the contraction direction and the damping force of the rear suspension 30 in the expansion direction to increase as the braking force of the front wheel brake 8B and/or the rear wheel brake 9B increases, based on the map. Thus, the damping force of the front fork 20 in the contraction direction and the damping force of the rear suspension 30 in the expansion force are controlled in accordance with the braking force of the front wheel brake 8B and/or the rear wheel brake 9B. Therefore, pitching can be preferably suppressed.

In Step S3, the suspension controller 63 may be configured to perform control of the spring reaction force of the front fork 20 and/or the rear suspension 30, instead of or together with control of the damping forces of the front fork 20 and the rear suspension 30. The storage 64 may be configured to store a map defining a relationship between the braking force of the front wheel brake 8B and/or the rear wheel brake 9B and each of the spring reaction force of the front fork 20 and the spring reaction force of the rear suspension 30. The above-described map may be set such that, as the braking force of the front wheel brake 8B and/or the rear wheel brake 9B increases, the spring reaction force of the front fork 20 increases and the spring reaction force of the rear suspension 30 reduces.

In the above-described embodiment, in Step S3, the suspension controller 63 increases both the damping force of the front fork 20 in the contraction direction and the damping force of the rear suspension 30 in the expansion direction, but the suspension controller 63 may be configured to increase only one of the damping force of the front fork 20 in the contraction direction and the damping force of the rear suspension 30 in the expansion direction.

Herein, the first control example is performed during the adaptive cruise control, but there is no particular limitation thereon. The first control example may be executed during some other cruise control than the adaptive cruise control and may be executed when cruise control is not performed.

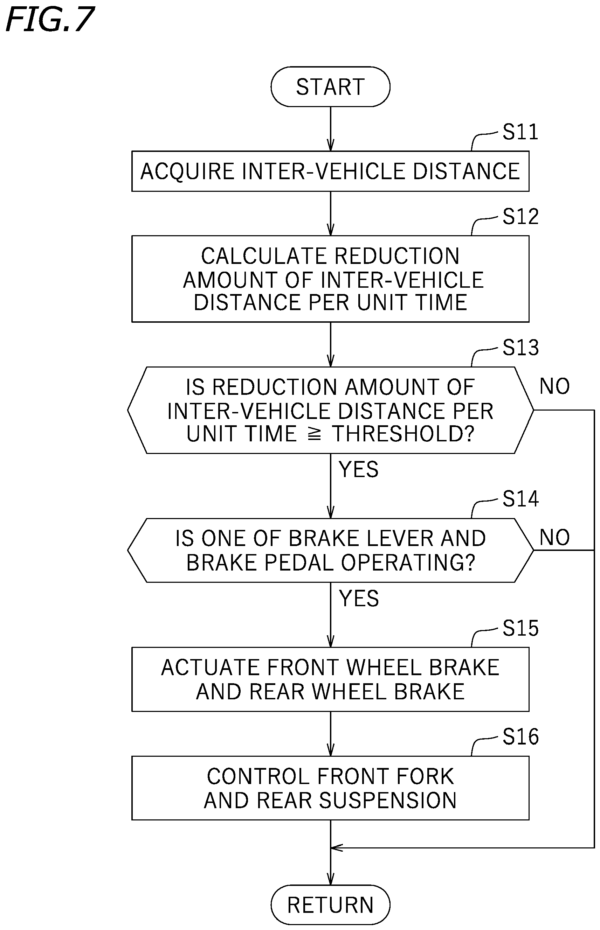

FIG. 7 is a flowchart related to a second control example. The second control example is, for example, control that is performed when the rider operates the brake lever 8C or the brake pedal 9C at a time when an inter-vehicle distance from a preceding vehicle becomes short during the adaptive cruise control.

In Step S11, the brake controller 62 acquires an inter-vehicle distance from a preceding vehicle. The inter-vehicle distance is detected by the radar 22. Next, in Step S12, the brake controller 62 calculates a reduction amount of the inter-vehicle distance per unit time. For example, when the preceding vehicle suddenly decelerates and thus the motorcycle 1 rapidly approaches the preceding vehicle, the reduction amount of the inter-vehicle distance per unit time is increased. In Step S13, the brake controller 62 determines whether the reduction amount of the inter-vehicle distance per unit time is equal to or larger than a threshold. When a determination result of Step S13 is YES, the process proceeds to Step S14.

In Step S14, the brake controller 62 determines whether one of the brake lever 8C and the brake pedal 9C is operating. When a determination result of Step S14 is YES, the process proceeds to Step S15.

In Step S15, the brake controller 62 actuates the front wheel brake 8B and the rear wheel brake 9B. The brake controller 62 actuates both the front wheel brake 8B and the rear wheel brake 9B, even when only the brake lever 8C is operated or even when only the brake pedal 9C is operated. Moreover, when the operation amount of the brake lever 8C is small, the brake controller 62 performs control in which the braking force of the front wheel brake 8B is increased. That is, when the operation amount of the brake lever 8C is equal to or smaller than a threshold, the brake controller 62 increases the braking force of the front wheel brake 8B to a higher level than that of the braking force of the front wheel brake 8B by an operation of the brake lever 8C. When the operation amount of the brake pedal 9C is small, the brake controller 62 performs control in which the braking force of the rear wheel brake 9B is increased. That is, when the operation amount of the brake pedal 9C is equal to or smaller than a threshold, the brake controller 62 increases the braking force of the rear wheel brake 9B to a higher level than that of the braking force of the rear wheel brake 9B by an operation of the brake pedal 9C.

The brake controller 62 controls the braking forces of the front wheel brake 8B and the rear wheel brake 9B, based on the reduction amount of the inter-vehicle distance per unit time. The brake controller 62 may be configured to cause the braking forces of the front wheel brake 8B and the rear wheel brake 9B to increase as the reduction amount of the inter-vehicle distance per unit time increases.

The motorcycle 1 decelerates due to actuation of the front wheel brake 8B and the rear wheel brake 9B. When the motorcycle 1 decelerates, it is likely that the posture of the vehicle body changes to the front-down posture and pithing occurs. In Step S16, the suspension controller 63 controls the front fork 20 and/or the rear suspension 30 so as to suppress pitching. Processing of Step S16 is similar to processing of Step S3 of the first control example, and therefore, detailed description thereof will be omitted.

In the above-described example, in Step S13, whether the reduction amount of the inter-vehicle distance per unit time is equal to or larger than the threshold is determined. Step S13 described above is an example of determination related to the inter-vehicle distance. Controlling the braking forces of the front wheel brake 8B and the rear wheel brake 9B when the reduction amount of the inter-vehicle distance per unit time is equal to or larger than the threshold is an example of controlling the braking forces of the front wheel brake 8B and the rear wheel brake 9B, based on the inter-vehicle distance. As used herein, the term "based on the inter-vehicle distance" is not limited to a case based on the inter-vehicle distance itself, but also includes a case based on various parameters related to the inter-vehicle distance. However, control of the front wheel brake 8B and the rear wheel brake 9B based on the inter-vehicle distance is not limited to control based on the reduction amount of the inter-vehicle distance, but may be control based on the inter-vehicle distance itself. For example, instead of Step S13, whether the inter-vehicle distance is equal to or smaller than a threshold may be determined.

As has been described above, according to the motorcycle 1 of this embodiment, even when the rider operates only one of the brake lever 8C and the brake pedal 9C for sudden braking, both the front wheel brake 8B and the rear wheel brake 9B are actuated. Even when a brake operation by the rider is insufficient for sudden braking, appropriate braking can be performed. Moreover, when the rider operates only one of the brake lever 8C and the brake pedal 9C, at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30 is performed. Thus, change of the posture of the motorcycle 1 to the front-down posture can be suppressed, so that pitching can be suppressed. Accordingly, reduction in riding comfort can be suppressed.

Note that the brake controller 62 may be configured to control a ratio between the braking forces of the front wheel brake 8B and the rear wheel brake 9B when the rider operates the brake lever 8C and the brake pedal 9C and the ratio due to the operation by the rider is inappropriate. The brake controller 62 may be configured such that, when the rider operates only the brake lever 8C, when the rider operates only the brake pedal 9C, or when the rider operates both the brake lever 8C and the brake pedal 9C, the brake forces of the front wheel brake 8B and the rear wheel brake 9B are automatically distributed. Thus, even when the brake operation by the rider is inappropriate for sudden braking, the braking forces of the front wheel brake 8B and the rear wheel brake 9B can be appropriately distributed, so that appropriate braking can be performed. Moreover, at this time, pitching can be suppressed and reduction in riding comfort can be suppressed.

According to this embodiment, when the brake lever 8C is not operated and the brake pedal 9C is operated, the brake controller 62 actuates both the front wheel brake 8B and the rear wheel brake 9B. When the rider operates only the brake pedal 9C for sudden braking, not only the rear wheel brake 9B but also the front wheel brake 8B is actuated. Accordingly, appropriate braking can be performed. Moreover, as described above, pitching can be suppressed at this time, so that reduction in riding comfort can be suppressed.

According to this embodiment, when the brake lever 8C is not operated and the brake pedal 9C is operated to a degree equal to or more than a predetermined threshold, the brake controller 62 can actuate the front wheel brake 8B and reduce the braking force of the rear wheel brake 9B to a lower level than that of the braking force of the rear wheel brake 9B by an operation of the brake pedal 9C. Thus, when the rider operates only the brake pedal 9C for sudden braking, not only the rear wheel brake 9B but also the front wheel brake 8B is actuated, and increase of the braking force of the rear wheel brake 9B to an excessive level can be prevented. Accordingly, the braking forces of the front wheel brake 8B and the rear wheel brake 9B can be balanced and appropriate braking can be performed.

In the first control example and the second control example, the suspension controller 63 causes the damping force of the front fork 20 in the expansion direction and/or the damping force of the rear suspension 30 in the contraction direction to increase as the braking force of the front wheel brake 8B and/or the rear wheel brake 9B increases. Thus, as degree of deceleration of the motorcycle 1 increases, the damping force of the front fork 20 in the contraction direction increases and/or the damping force of the rear suspension 30 in the expansion direction increases. Pitching can be more effectively suppressed, and therefore, reduction in riding comfort can be sufficiently suppressed.

As described above, in the first control example and the second control example, the suspension controller 63 may be configured to cause the spring reaction force of the front fork 20 to increase and/or the spring reaction force of the rear suspension 30 to reduce as the braking force of the front wheel brake 8B and/or the rear wheel brake 9B increases. Thus, as the degree of deceleration of the motorcycle 1 increases, the spring reaction force of the front fork 20 increases and/or the spring reaction force of the rear suspension 30 reduces. Also, in this case, pitching can be more effectively suppressed, and reduction in riding comfort can be sufficiently suppressed.

In the second control example, when the rider operates only one of the brake lever 8C and the brake pedal 9C, the brake controller 62 controls the braking forces of the front wheel brake 8B and the rear wheel brake 9B, based on the inter-vehicle distance from the preceding vehicle. Thus, for example, even when the motorcycle 1 rapidly approaches the preceding vehicle and the brake operation by the rider then is insufficient, appropriate braking can be performed to keep the inter-vehicle distance.

Note that the second control example is merely an example. The brake controller 62 may be configured to, when the rider operates both the brake lever 8C and the brake pedal 9C, control the braking forces of the front wheel brake 8B and the rear wheel brake 9B, based on the inter-vehicle distance from the preceding vehicle. For example, when the ratio between the operation amounts of the brake lever 8C and the brake pedal 9C operated by the rider is inappropriate, the brake controller 62 appropriately distributes the braking forces of the front wheel brake 8B and the rear wheel brake 9B. For example, when necessary deceleration cannot be achieved only by operations of the brake lever 8C and the brake pedal 9C by the rider, the brake controller 62 increases the braking forces of the front wheel brake 8B and the rear wheel brake 9B. Also, when the rider operates both the brake lever 8C and the brake pedal 9C, appropriate braking can be performed to keep the inter-vehicle distance.

In the second control example, when the operation amount of the brake lever 8C is equal to or smaller than the threshold, the brake controller 62 increases the braking force of the front wheel brake 8B to a higher level than that of the braking force of the front wheel brake 8B by an operation of the brake lever 8C. When the operation amount of the brake pedal 9C is equal to or smaller than the threshold, the brake controller 62 increases the braking force of the rear wheel brake 9B to a higher level than that of the braking force of the rear wheel brake 9B by an operation of the brake pedal 9C. Thus, for example, when the inter-vehicle distance from the preceding vehicle is rapidly reduced, sufficient braking operation can be performed to keep the inter-vehicle distance even in a case where the operation amount of the brake lever 8C or the brake pedal 9C operated by the rider is small.

One embodiment of the straddled vehicle has been described above, but the above-described embodiment is merely an example. Various other embodiments are also possible.

In the above-described embodiment, the front fork 20 is an example of an electronically controlled front suspension, but the front suspension is not limited to the front fork 20. The front suspension is not limited to a front suspension including a telescopic type mechanism, but may be a front suspension including a telelever type mechanism.

The straddled vehicle is a vehicle that a rider straddles to ride. The straddled vehicle is not limited to the motorcycle 1. The straddled vehicle may be, for example, a motor tricycle, an all-terrain vehicle (ATV), a snowmobile, or the like.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principle of the present invention. These preferred embodiments are provided with the understanding that they are not intended to limit the present invention to the preferred embodiments described in the specification and/or shown in the drawings. The present invention is not limited to the preferred embodiment described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or used during the prosecution of the present application.

### Reference signs list

1 motorcycle (straddled vehicle), 8 front wheel, 8B front wheel brake, 8C brake lever (front wheel brake operator), 9 rear wheel, 9B rear wheel brake, 9C brake pedal (rear wheel brake operator), 10 vehicle body frame, 20 front fork (front suspension), 22 radar (preceding vehicle detection device), 30 rear suspension, 60 control device, 62 brake controller, 63 suspension controller, 64 storage

## Claims

1. A straddled vehicle (1) comprising:
a vehicle body frame (10);
a front wheel (8) supported by the vehicle body frame (10);
a rear wheel (9) supported by the vehicle body frame (10);
a front wheel brake (8B) that brakes the front wheel (8);
a rear wheel brake (9B) that brakes the rear wheel (9);
a front wheel brake operator (8C) that is operated by a rider;
a rear wheel brake operator (9C) that is operated by the rider;
an electronically controlled front suspension (20) connected to the vehicle body frame (10) and the front wheel (8);
an electronically controlled rear suspension (30) connected to the vehicle body frame (10) and the rear wheel (9); and
a control device (60) connected to the front wheel brake (8B), the rear wheel brake (9B), the front wheel brake operator (8C), the rear wheel brake operator (9C), the front suspension (20), and the rear suspension (30),
wherein
the control device (60) includes
a brake controller (62) that, when one of the front wheel brake operator (8C) and the rear wheel brake operator (9C) is operated, executes control for actuating both the front wheel brake (8B) and the rear wheel brake (9B), and
a suspension controller (63) that, when the brake controller (62) executes the control, performs at least one of increasing a damping force of the front suspension (20) in a contraction direction, increasing a spring reaction force of the front suspension (20), increasing a damping force of the rear suspension (30) in an expansion direction, and reducing a spring reaction force of the rear suspension (30).

2. The straddled vehicle (1) according to claim 1,
wherein
the brake controller (62) is configured to, when the front wheel brake operator (8C) is not operated and the rear wheel brake operator (9C) is operated, actuate both the front wheel brake (8B) and the rear wheel brake (9B).

3. The straddled vehicle (1) according to claim 1 or 2,
wherein
the brake controller (62) is configured to, when the front wheel brake operator (8C) is not operated and the rear wheel brake operator (9C) is operated to a degree equal to or more than a predetermined threshold, actuate the front wheel brake (8B) and reduce a braking force of the rear wheel brake (9B) to a lower level than a braking force of the rear wheel brake (9B) by an operation of the rear wheel brake operator (9C).

4. The straddled vehicle (1) according to claim 2 or 3,
wherein
the suspension controller (63) is configured to, when the brake controller (62) executes the control, cause the damping force of the front suspension (20) in the contraction direction to increase and/or the damping force of the rear suspension (30) in the expansion direction to increase as a braking force of the front wheel brake (8B) and/or the rear wheel brake (9B) increases.

5. The straddled vehicle (1) according to any one of claims 2 to 4,
wherein
the suspension controller (63) is configured to, when the brake controller (62) executes the control, cause the spring reaction force of the front suspension (20) to increase and/or the spring reaction force of the rear suspension (30) to reduce as a braking force of the front wheel brake (8B) and/or the rear wheel brake (9B) increases.

6. The straddled vehicle (1) according to any one of claims 1 to 5, further comprising:
a preceding vehicle detection device (22) that is supported by the vehicle body frame (10) and detects an inter-vehicle distance from a preceding vehicle,
wherein
the brake controller (62) is configured to, when one of the front wheel brake operator (8C) and the rear wheel brake operator (9C) is operated, control the braking forces of the front wheel brake (8B) and the rear wheel brake (9B), based on at least the inter-vehicle distance detected by the preceding vehicle detection device (22).

7. The straddled vehicle (1) according to claim 6,
wherein
the brake controller (62) is configured to calculate a reduction amount of the inter-vehicle distance detected by the preceding vehicle detection device (22) per unit time and, when the reduction amount is equal to or larger than a threshold and it is detected that the front wheel brake operator (8C) has been operated to a degree equal to or lower than the threshold, actuate the rear wheel brake (9B) and increase the braking force of the front wheel brake (8B) to a higher level than a braking force of the front wheel brake (8B) by an operation of the front wheel brake operator (8C).

8. The straddled vehicle (1) according to claim 6 or 7,
wherein
the brake controller (62) is configured to calculate a reduction amount of the inter-vehicle distance detected by the preceding vehicle detection device (22) per unit time and, when the reduction amount is equal to or larger than a threshold and it is detected that the rear wheel brake operator (9C) has been operated to a degree equal to or lower than the threshold, actuate the front wheel brake (8B) and increase the braking force of the rear wheel brake (9B) to a higher level than a braking force of the rear wheel brake (9B) by an operation of the rear wheel brake operator (9C).

9. The straddled vehicle (1) according to any one of claims 6 to 8,
wherein
the suspension controller (63) is configured to, when the brake controller (62) executes the control, cause the damping force of the front suspension (20) in the contraction direction to increase and/or the damping force of the rear suspension (30) in the expansion direction to increase as the braking force of the front wheel brake (8B) and/or the rear wheel brake (9B) increases.

10. The straddled vehicle (1) according to any one of claims 6 to 9,
wherein
the suspension controller (63) is configured to, when the brake controller (62) executes the control, cause the spring reaction force of the front suspension (20) to increase and/or the spring reaction force of the rear suspension (30) to reduce as the braking force of the front wheel brake (8B) and/or the rear wheel brake (9B) increases.
